# EUROPEAN PATENT APPLICATION

(11) **EP 4 518 083 A1**
(43) Date of publication of application: **05.03.2025**
(21) Application number: 23194059.4
(22) Date of filing: 29.08.2023
(51) Int. Cl.: H02J 7/00, H02M 7/483

(54) **MODULAR ENERGY STORAGE DEVICE AND SYSTEM**

(71) Applicant: Rimac Technology LLC, 10431 Sveta Nedelja (HR)
(72) Inventor: Cimon, Pierre-Olivier, Stoneham-et-Tewkesbury QC G3C 1E4 (CA); Hadziabdic, Haris, 71000 Sarajevo (BA)
(74) Representative: Sonnenberg Harrison Partnerschaft mbB

(57) **Abstract**

What is proposed is a modular energy storage device (100), the modular energy storage device comprising: at least a first modular energy storage string (300) having a plurality of energy sources (302), at least one power converter module (304), the at least one power converter module (304) comprising at least two switching elements (2800) for selectively switching each of the plurality of energy sources (302), a first neutral terminal (320), a first load terminal (330), and at least one of a second neutral terminal (322) and a second load terminal (332). The modular energy storage device (100) further comprises a neutral terminal connector module (220) connectable or connected to the first neutral terminal (320) and/or the second neutral terminal (322) and/or a load terminal connector module (230) connectable or connected to the first load terminal (330) and/or the second load terminal (332). The neutral terminal connector module (220) is connectable to at least a neutral point or at least a common star point and/or the load terminal connector module (230) is connectable to at least a load (430). The neutral terminal connector module (220) and/or the load terminal connector module (230) are configured for parallel connection with at least a further modular energy storage string and the modular energy storage device (100) is preferably configured to be connectable to or connected in series to a further modular energy storage device (108), and/or the modular energy storage device (100) is preferably configured to be connectable to or connected in a double star circuit configuration.

## Description

The present invention relates to a modular energy storage device, a modular energy storage system and a method for modifying a modular energy storage device.

In recent years, there has been a growing awareness of the need to transition towards sustainable and environmentally friendly practices. One critical aspect of this transition is the adoption of electric vehicles as an alternative to traditional internal combustion engine vehicles. Electric vehicles offer significant benefits, such as reduced greenhouse gas emissions and lower operational costs. At the heart of these electric vehicles lies their energy storage system - the battery, which is also a main cost factor of electric vehicles. While batteries are essential during the primary use phase of electric vehicles, their significance extends even further in their so-called second life use, bringing about various environmental, economic, and technological advantages.

Firstly, it is essential to understand the concept of "second life" for batteries. After serving their initial purpose in electric vehicles, where they might have lost some of their capacity, these batteries can still hold a considerable amount of energy and are viable for use in other applications. Instead of being discarded, which could create environmental issues due to the hazardous materials they contain, giving these batteries a second life can maximize their potential and minimize waste.

One of the most significant benefits of utilizing electric vehicle batteries in their second life is their potential contribution to energy storage and grid management. The integration of renewable energy sources like solar and wind can be challenging due to their intermittent nature. Energy storage systems, such as batteries, act as a buffer by storing excess energy generated during peak periods and releasing it when demand exceeds supply. This process helps stabilize the electrical grid, reducing the reliance on fossil fuel power plants and promoting a cleaner, more sustainable energy mix.

Moreover, the deployment of used electric vehicle batteries for energy storage extends their lifespan and optimizes their economic value. Instead of becoming a financial burden for electric vehicle owners when they need to be replaced, these batteries can become an additional revenue stream, providing a more attractive return on investment. This economic benefit can incentivize more people to adopt electric vehicles, contributing to the growth of the electric vehicle market and further reducing carbon emissions from transportation.

Another crucial aspect of second life use for electric vehicle batteries is in promoting circular economy practices. A circular economy aims to reduce waste and make the most of available resources by reusing and recycling materials. By integrating used electric vehicle batteries into new applications, the product lifecycle of electric vehicle batteries is effectively extended and the demand for raw materials is minimized, ultimately reducing the environmental impact associated with mining and manufacturing new batteries.

Furthermore, repurposing electric vehicle batteries for second life applications helps to address the issue of battery disposal. Lithium-ion batteries, which are commonly used in electric vehicles, contain toxic and hazardous materials that can pose environmental risks if not disposed of properly. By utilizing these batteries in second life stationary energy storage systems, the environmental impact is mitigated and the need for complex and expensive recycling processes is reduced.

However, it is crucial to acknowledge that second life use of electric vehicle batteries also comes with some challenges. As batteries age, their capacity and performance degrade, which can affect their suitability for certain applications. To ensure safe and efficient integration into second life systems, proper testing, and evaluation of the batteries' state of health are necessary.

Electric vehicle batteries are further conventionally designed primarily for the use in the electric vehicles. This might make substantial adaptations with regards to the hardware and also the control software of the electric vehicle batteries necessary to enable their use in a second life application. Certain terminals of energy storage modules of conventional electric vehicle batteries are often hardwired which reduces the flexibility of using the battery in a second life scenario. For example, conventional electric vehicle batteries often have a hardwired neutral point which leads to a fixed system voltage and impede voltage scalability in a second life system integrating a plurality of electric vehicle batteries. Conventional electric vehicle batteries further often have a hardwired short circuit on their load side which also reduces the flexibility of using the battery in a second life scenario.

Adapting conventional electric vehicle batteries for use in second life after their first life might, for example, contain removing hardwiring from within the battery housing. These adaptations can cause substantial transition costs from first life to second life. The transition costs can contain costs for labor and machinery as well as costs for transporting the batteries to a site where the adaptations are performed. The transition costs reduce the economic and also the ecological potential of second life use of electric vehicle batteries. Conventional electric vehicle batteries are not designed to provide full flexibility for first life usage as well as for second life usage.

Against this background, it is an object of the present invention to provide an improved modular energy storage device, an improved modular energy storage system and an improved method for modifying the modular energy storage device.

The object is attained by a modular energy storage device having the features of claim 1 and a modular energy storage device having the features of claim 9. Furthermore, the object is attained by a modular energy storage system having the features of claim 15 and a method for modifying the modular energy storage device having the features of claim 19.

Advantageous embodiments of the present disclosure are the subject matter of the dependent claims. Any and all combinations of at least two features disclosed in the description, the claims, and/or the figures fall within the scope of the present disclosure. Naturally, the explanations given in connection with the modular energy storage device equivalently relate to the modular energy storage system and/or the method for modifying a modular energy storage device according to the present disclosure without being mentioned redundantly in its/their context. In particular, linguistically common rephrasing and/or an analogous replacement of respective terms within the scope of common linguistic practice, in particular the use of synonyms backed by the generally recognized linguistic literature, are, of course, comprised by the content of the disclosure at hand without every variation having to be expressly mentioned.

In accordance with a first aspect, a modular energy storage device is provided. The modular energy storage device comprises at least a first modular energy storage string having a plurality of energy sources, at least one power converter module, the at least one power converter module comprising at least two switching elements for selectively switching each of the plurality of energy sources, a first neutral terminal, a first load terminal, and at least one of a second neutral terminal and a second load terminal. The modular energy storage device further comprises a neutral terminal connector module. The neutral terminal connector module is connectable or connected to the first neutral terminal and alternatively or additionally the neutral terminal connector module is connectable or connected to the second neutral terminal. The modular energy storage device comprises alternatively or additionally a load terminal connector module. The load terminal connector module is connectable or connected to the first load terminal and alternatively or additionally the load terminal connector module is connectable or connected to the second load terminal.

The neutral terminal connector module is connectable to at least a neutral point or at least a common star point. Alternatively or additionally, the load terminal connector module is connectable to at least a load. The neutral terminal connector module and alternatively or additionally the load terminal connector module may be configured for parallel connection with at least a further modular energy storage string.

The modular energy storage device is preferably configured to be connectable to or connected in series to a further modular energy storage device. Alternatively or additionally, the modular energy storage device is preferably configured to be connectable to or connected in a double star circuit configuration.

The present application thus relates to a modular energy storage device such as a battery or AC battery, which can be used for different application such as a traction battery for electric vehicles and/or a grid-connected energy storage. The modular energy storage device can also be used for various other applications. The modular energy storage device has at least one first modular energy storage string with a first neutral terminal and a first load terminal. The modular energy storage device further has at least one of a second neutral terminal and a second load terminal. The first modular energy storage string has a plurality of energy sources such as but not limited to single battery cells and/or a defined number of battery cells. The modular energy storage device further has a neutral terminal connector module and alternatively or additionally a load terminal connector module. The neutral terminal connector module is configured to be connectable or connected to the first neutral terminal and alternatively or additionally to the second neutral terminal. The neutral terminal connector module is configured to be connectable to at least a neutral point or at least a common star point. The load terminal connector module is configured to be connectable or connected to the first load terminal and alternatively or additionally to the second load terminal. The load terminal connector module is configured to be connectable to at least a load which receives electrical energy from the modular energy storage device. The modular energy storage device is configured to be connectable or connected to a further modular energy storage device using the load terminal connector module and alternatively or additionally the neutral terminal connector module of the modular energy storage device and using the load terminal connector module and alternatively or additionally the neutral terminal connector module of the further modular energy storage device. The modular energy storage device is configured to be connectable or connected to the further modular energy storage device in series or in parallel.

Thus, herein, a technical solution for the above-identified object is provided. Particularly, the modular energy storage device can be flexibly connected in different applications to a load on the load side using the load terminal connector module. The modular energy storage device can alternatively be connected to the further modular energy storage device on the load side using the load terminal connector module without the need to perform any adaptations to the modular energy storage device. The modular energy storage device can further be flexibly connected in different applications on the neutral side using the neutral terminal connector module. The modular energy storage device can, for example, be connected to the further modular energy storage device on the neutral side using the neutral terminal connector module without the need to perform any adaptations to the modular energy storage device.

The modular energy storage device can therefore be easily used in different applications such as a first life use of a battery in an electric vehicle as well as a second life use of the battery as a large-scale energy storage in conjunction with a plurality of further batteries. There is therefore no need to adapt the electrical connections such as wiring of any of the first neutral terminal, the second neutral terminal, the first load terminal, and the second load terminal within the modular energy storage device when transferring the modular energy storage device from one application to another.

"Modular energy storage device" preferably refers to a device designed to store electrical energy and supply electrical energy to a load connected to the modular energy storage device. The modular energy storage device preferably is further designed to receive electrical energy which is then stored. The modular energy storage device can be an electrochemical device such as a battery or rechargeable battery. When connected to a circuit, the modular energy storage device transfers electrons, creating electrical current. The modular energy storage device can be an AC battery supplying alternating current or can be a DC battery supplying direct current. The modular energy storage device may alternatively be or include a battery which can supply both alternating current and direct current. The modular energy storage device according to the invention can flexibly be used in different application scenarios.

"Modular energy storage string" preferably refers to a set of interconnected energy sources (or energy storage units) arranged in a modular fashion. The plurality of energy sources preferably collectively forms a primary energy storage/delivery component within the modular energy storage device. The plurality of energy sources is preferably designed to store and/or provide electrical energy for use and power support as required.

"Energy sources" preferably refer to the individual components and/or units within the first modular energy storage string that store and/or deliver electrical energy. These sources can include single battery cells, batteries having multiple battery cells, supercapacitors, photovoltaic cells, fuel cells, electromechanical power converters, and/or capacitive energy sources or any other energy storage devices capable of storing and delivering electrical power. The battery cells can be such as pouch cells, cylindrical cells or prismatic cells.

"Power converter module" preferably refers to a module within the modular energy storage device or string that facilitates the conversion and/or control of electrical power. The power converter module may include circuitry, such as switching elements, to manipulate the flow of electrical energy and regulate voltage and current levels.

"Switching element" preferably refers to electronic devices, such as transistors or thyristors, used within the power converter module to control the flow of electric current. These elements can be turned on or off selectively to enable or interrupt the current path and facilitate the desired energy transfer or conversion.

It should be noted that the plurality of energy sources may preferably be at least temporarily connected in series. The plurality of energy sources may at least temporarily be connected in series positive and/or in series negative. Also, particularly depending on the setup of the power converter module, the plurality of energy sources may at least temporarily be connected in parallel or in a bypass connection.

Of course, the at least one power converter module may have a switch configuration with more than two switching elements. The power converter module can be one integrated component or can be separated into different sub-components. For example, the power converter module can comprise of several power converter modules, wherein each of the energy sources has one of the several power converter modules. Each of the several power converter modules can have one or more of the switching elements.

A "terminal" preferably refers to a specific point and/or connector on the modular energy storage string where external electrical connections or electrical connections from the energy sources and/or power converter modules of the modular energy storage string to an exterior of the modular energy storage string can be made.

The "neutral terminal" preferably refers to a terminal on a neutral side of the modular energy storage string and the "load terminal" preferably refers to a terminal on a load side of the modular energy storage string. The claim indicates that there is at least one neutral terminal and at least one load terminal. The modular energy storage string further has a second neutral terminal and/or a second load terminal. The at least one switching element of the power converter module is configured to switch between the first neutral terminal, the second neutral terminal, the first load terminal, and the second load terminal.

"Terminal connector module" preferably refers to a device and/or component that enables the electrical connection and/or disconnection of the terminals of the at least one modular energy storage string of the modular storage energy device to or from another electrical device or component. Each of the first neutral terminal, the first load terminal, the second neutral terminal, and/or the second load terminal can be individually electrically connected to another electrical device or component using the terminal connector module. The terminal connector module can be a connector with one pin for every respective terminal of the at least one modular energy storage string. The respective pin of the terminal connector module is electrically connected to the respective terminal of the at least one modular energy storage string by, for example, wiring. The terminal connector module is configured to be connected to another electrical component such as a further connector. The "neutral terminal connector module" preferably refers to a terminal connector module electrically connected to the first neutral terminal and/or the second neutral terminal. The "load terminal connector module" preferably refers to a terminal connector module electrically connected to the first load terminal and/or the second load terminal.

Here, a terminal connector module may also describe any kind of switch and/or any kind of switch matrix suitable for performing the connection to and from the terminals of the at least one modular energy storage string.

"Connectable or connected to the first neutral terminal and/or the second neutral terminal" preferably refers to the capability of the neutral terminal connector module to be electrically connected to at least one of the first neutral terminal and the second neutral terminal. This connection preferably enables the modular energy storage device to interface and/or exchange power with a device or component connected to the neutral terminal connector module.

"Connectable or connected to the first load terminal and/or the second load terminal" preferably refers to the capability of the load terminal connector module to be electrically connected to at least one of the first load terminal and the second load terminal. This connection preferably enables the modular energy storage device to interface and/or exchange power with a device or component connected to the load terminal connector module.

"Connectable to at least a neutral point or at least a common star point" preferably refers to the capability of the neutral terminal connector module to be electrically connected to at least one of a neutral point and a common star point. A (common) star point, in electrical systems, preferably refers to a central reference or connection point. It is preferably used in configurations where multiple components or elements are connected in a star or radial pattern. In this context, the at least one first modular energy storage string can be interconnected and/or linked to a shared central connection point known as the common star point using the neutral terminal connector module. This configuration preferably allows for the consolidation and/or convergence of electrical connections from the at least one modular energy storage string. It preferably enables the at least one modular energy storage string to share a common reference point, which may have various advantages in terms of electrical distribution, control, and/or monitoring within the modular energy storage device.

"Connectable to at least a load" preferably refers to the capability of the load terminal connector module to be electrically connected to at least one load. The at least one load can be an electrical component or device which consumes or receives electrical energy from the modular energy storage device. The load can convert the electrical energy into other forms of energy or performs a specific task. The load can be, for example, an electric motor which receives electrical energy from the modular energy storage device and converts the electrical energy into kinematic energy. Another example for a load can be a further modular energy storage device which can be electrically connected to the modular energy storage device using the load terminal connector module of the modular energy storage device.

"Configured for parallel connection with at least a further modular energy storage string" means that the neutral terminal connector module and the load terminal connector module connect the first modular energy storage string and the further modular energy storage string so that the current of the first modular energy storage string and the current of the further modular energy storage string are added and/or summed up together. In other words, "configured for parallel connection" means that the respective outputs of at least two devices that are connected in parallel, are in parallel connection.

"Connectable to or connected in series to a further modular energy storage device" preferably refers to the capability of the modular energy storage device to be connected to a further modular energy storage device so that the same current passes through the modular energy storage device and the further modular energy storage device. The modular energy storage device can be connected to the further modular energy storage device using the load terminal connector module of the modular energy storage device and the neutral terminal connector module of the further modular energy storage device. The modular energy storage device can be alternatively connected to the further modular energy storage device using the neutral terminal connector module of the modular energy storage device and the load terminal connector module of the further modular energy storage device.

"Connectable to or connected in a double star circuit configuration" preferably refers to capability of the modular energy storage device to be electrically connected in a double star circuit.

In one embodiment, the modular energy storage device further comprises a housing. The "housing" can also be referred to as an enclosure or case and preferably refers to a protective container or casing that encompasses components of the modular energy storage device. The housing provides physical protection to the components inside and often incorporates features like insulation, ventilation, and/or sealing to ensure safe and efficient operation of the modular energy storage device. The housing can also protect the modular energy storage device from water and moisture exposure. Opening a battery housing can require a considerable amount of effort and can pose further challenges, particularly due to the high demands placed on the sealing of a battery housing. Parts of a battery housing can also often not be opened non-destructively. The at least first modular energy storage string is provided at least partly within the housing. At least a connecting part of the neutral terminal connector module is provided outside the housing, the connecting part being connectable to the at least one neutral point or the at least one common star point. At least a connecting part of the load terminal connector module is provided outside the housing, the connecting part being connectable to the load. The connecting part of the neutral terminal connector module and the connecting part of the load terminal connector module therefore enable the electrical connection to and/or from each of the first neutral terminal and/or the second neutral terminal, the first load terminal and/or the second load terminal individually from outside the housing. In case a different electrical connection from or to or between the first neutral terminal and/or the second neutral terminal, the first load terminal and/or the second load terminal is necessary due to a change of the application in which the modular energy storage is used, there is no need for adaptations of any hardware such as components or wiring within the housing.

In a further embodiment, the modular energy storage device further comprises at least a second modular energy storage string. The modular energy storage device alternatively or additionally comprises a third modular energy storage string. The second modular energy storage string and/or the third modular energy storage string are equivalently configured to the at least first modular energy storage string but can also be differently configured to the at least first modular energy storage string. The neutral terminal connector module is connectable or connected to at least a first neutral terminal of the second modular energy storage string and/or at least a first neutral terminal of the third modular energy storage string. Additionally or alternatively, the load terminal connector module is connectable or connected to at least a first load terminal of the second modular energy storage string and/or at least a first load terminal of the third modular energy storage string. The modular energy storage device can be an AC battery and the first modular energy storage string, the second modular energy storage string and the third modular energy storage string can represent three corresponding phases of the AC battery.

The modular energy storage device with the first modular energy storage string, the second modular energy storage string, and the third modular energy storage string enables the modular energy storage device to provide three-phase alternating current, wherein one of the three modular energy storage strings respectively corresponds to one phase. The modular energy storage device can of course have less or more than three modular energy storage strings.

In a further embodiment the modular energy storage device further comprises a neutral short circuit module. The neutral short circuit module is preferably removably connected or connectable to the neutral terminal connector module and connecting at least the first neutral terminal of the first modular energy storage string and at least the first neutral terminal of the second modular energy storage string. The "neutral short circuit device" preferably refers to an electrical device or component which is able to electrically connect the first neutral terminal of the first modular energy storage string and at least the first neutral terminal of the second modular energy storage string. The neutral short circuit device can be a busbar which is connectable or connected to the neutral terminal connector module. The neutral short circuit device can further provide a terminal for electrical connection of a further electronic device or component to and/or from the first neutral terminal of the first modular energy storage string and at least the first neutral terminal of the second modular energy storage string.

In a further embodiment, the modular energy storage device further comprises a load terminal connector multiplexer. The load terminal connector multiplexer is connectable to the load terminal connector module of the modular energy storage device. Alternatively or additionally, the load terminal connector multiplexer is connectable to the load. Alternatively or additionally, the load terminal connector multiplexer is connectable to a load terminal connector module of a further modular energy storage device. The load terminal connector multiplexer is configured to connect at least a first phase of the load to the first load terminal and/or the second load terminal of the first modular energy storage string of the modular energy storage device. Alternatively or additionally, the load terminal connector multiplexer is configured to connect at least the first phase of the load to a first load terminal and/or a second load terminal of a first modular energy storage string of the further modular energy storage device.

The neutral short circuit module and the load terminal connector multiplexer can alternatively be designed as a combined neutral short circuit module and load terminal connector multiplexer. The combined neutral short circuit module and load terminal connector multiplexer can be one integral component and can be removably connected or connectable to the neutral terminal connector module and to the load terminal connector module of the modular energy storage device.

"Load terminal connector multiplexer" preferably refers to a device and/or component that enables the electrical connection and/or disconnection of the terminals of the at least one modular energy storage string of the modular storage energy device to or from another electrical device or component via the load terminal connector module. Alternatively or additionally, the load terminal connector multiplexer enables the electrical connection and/or disconnection of the terminals of the at least one modular energy storage string of the further modular storage energy device to or from the another electrical device or component via the load terminal connector module.

The load terminal connector multiplexer can be individually designed to meet the requirements of the electrical device of component which is to be connected to the modular energy storage device and/or the further modular energy storage device using the load terminal connector multiplexer. A three-phase load may, for example, be connected to the modular energy storage device using the load terminal connector multiplexer such that a first phase of the load is connected to the first load terminal and the second load terminal of the first modular energy storage string. A second phase of the load may be connected to the first load terminal and the second load terminal of the second modular energy storage string and a third phase of the load may be connected to the first load terminal and the second load terminal of the third modular energy storage string.

In another example a one-phase load could also be connected to the same modular energy storage device by using a differently designed load terminal connector multiplexer which connects the one phase of the load to, for example, only the first load terminal and/or the second load terminal of the first modular energy storage string. The load terminal connector multiplexer could also be designed to connect the one phase of the load to the first load terminal and the second load terminal of the first modular energy storage string, to the first load terminal and the second load terminal of the second modular energy storage string and to the first load terminal and the second load terminal of the third modular energy storage string.

The load terminal connector multiplexer may also describe any kind of switch and/or any kind of switch matrix suitable for performing variable connection to and from the terminals of the at least one modular energy storage string.

The use of the load terminal connector multiplexer in combination with the load terminal connector module enables even more the flexible use of the modular energy storage device in different applications.

In a further embodiment the modular energy storage device further comprises a load terminal connector multiplexer connectable to the load terminal connector module and/or connectable to the load. The load terminal connector multiplexer is configured to connect at least a first phase of the load to the first load terminal and/or the second load terminal of the first modular energy storage string. The load terminal connector multiplexer is further configured to connect a second phase of the load to the first load terminal and/or the second load terminal of the second modular energy storage string. Alternatively or additionally, the load terminal connector multiplexer is configured to connect a third phase of the load to the first load terminal and/or the second load terminal of the third modular energy storage string.

In a further embodiment the load terminal connector multiplexer is removably connected or connectable to the load terminal connector module. The load terminal connector module alternatively at least partly comprises the load terminal connector multiplexer. "Removably connected or connectable" preferably means that the load terminal connector multiplexer can be attached or connected to the load terminal connector module and can further be removed or disconnected from the load terminal connector module without damaging or destroying one of the load terminal connector multiplexer or the load terminal connector module. The removable connection further enhances the flexibility of the usage of the modular energy storage device in different applications.

In a further embodiment the modular energy storage device further comprises a neutral short circuit module connected or connectable to the neutral terminal connector module and connecting / short-circuiting the first neutral terminal of the first modular energy storage string and the second neutral terminal of the first modular energy storage string, preferably via the neutral short circuit module. Such a neutral point short circuit may, for example, be required in topologies such as a modular multilevel series-parallel converter (MMSPC) topology or an 8 switch topology.

In accordance with a second aspect, a modular energy storage device is provided. The modular energy storage device comprises a first modular energy storage string having a plurality of energy sources, at least one power converter module, the at least one power converter module comprising at least two switching elements for selectively switching each of the plurality of energy sources, at least a first neutral terminal, and at least a first load terminal. The modular energy storage device further comprises a second modular energy storage string, the second modular energy storage string being equivalently configured to the at least first modular energy storage string. The modular energy storage device further comprises at least a neutral terminal connector module connectable or connected to the first neutral terminal of the first modular energy storage string and to the first neutral terminal of the second modular energy storage string, preferably in parallel. Alternatively or additionally, the modular energy storage device further comprises at least a load terminal connector module connectable or connected to the first load terminal of the first modular energy storage string and to the first load terminal of the second modular energy storage string, preferably in parallel.

In one embodiment the modular energy storage device further comprises a neutral short circuit module connectable to the neutral terminal connector module. The neutral short circuit module is configured to connect the first neutral terminal of the first modular energy storage string and the first neutral terminal of the second modular energy storage string, preferably via the neutral terminal connector module.

In a further embodiment the neutral short circuit module is removably connected or connectable to the neutral terminal connector module.

In a further embodiment the modular energy storage device further comprises a housing. The first modular energy storage string and the second modular energy storage string are provided at least partly within the housing. At least a connecting part of the neutral terminal connector module is provided outside the housing. Alternatively or additionally, at least a connecting part of the load terminal connector module is provided outside the housing.

In a further embodiment the at least two switching elements are configured for selectively switching each of the plurality of energy sources at least temporarily in series positive and/or in series negative and/or in a positive bypass state and/or in a negative bypass state and/or in parallel. "Series positive and/or series negative" preferably refers to that the switching elements allow the energy sources to be connected in series positive or series negative configurations. Series positive preferably refers to connecting the positive terminals of the energy sources together. Series negative preferably refers to connecting the negative terminals together. "In a positive bypass state and/or in a negative bypass state" preferably refers to that the switching elements enable a positive bypass state or a negative bypass state. Positive bypass preferably means that the energy sources can be bypassed or disconnected from the system for positive current flow. Negative bypass preferably allows the energy sources to be bypassed for negative current flow. "In parallel" preferably refers to that the switching elements facilitate parallel connection of the energy sources. This preferably means that the positive terminals of the sources can be connected, and the negative terminals can be connected, allowing them to work collectively.

In a further embodiment the neutral terminal connector module is configured to be connected directly to at least the first neutral terminal and/or the second neutral terminal or with interposition of further electric components. The electric components can preferably be a fuse and/or an inductor and/or a capacitor and/or a contactor and/or a transistor and/or a sensor (such as a voltage sensor, a temperature sensor, a current sensor and an insulation sensor). Alternatively or additionally, the load terminal connector module is configured to be connected directly to at least the first load terminal and/or the second load terminal or with interposition of further electric components. The electric components can preferably be a fuse and/or an inductor and/or a capacitor and/or a contactor and/or a transistor and/or a sensor (such as a voltage sensor, a temperature sensor, a current sensor and an insulation sensor).

In accordance with a third aspect, a modular energy storage system is provided. The modular energy storage system comprises a first modular energy storage device as claimed herein before and hereinafter and a load. The load is at least connected to the load terminal connector module of the first modular energy storage device. The modular energy storage system further comprises a neutral short circuit module which is at least connected to the neutral terminal connector module of the first modular energy storage device. The modular energy storage system can, for example, be implemented in an electric vehicle, wherein the modular energy storage system is a traction battery, and the load is an electric motor of the electric vehicle.

In one embodiment the modular energy storage system further comprises at least one DC link connected to at least the neutral terminal connector module of the first modular energy storage device or to at least the neutral short circuit module. "DC link" preferably refers to a circuit or conductor that connects different components or modules operating on direct current (DC). The DC link serves as a bridge between these components, facilitating the transfer of electrical energy and ensuring smooth operation of the entire system. In applications like power converters or motor drives, the DC link may act as an intermediate energy storage and transfer mechanism. It preferably consists of capacitors and/or inductors connected in parallel and/or series configuration. DC links play a critical role in various applications, including renewable energy systems, variable frequency drives, and other power electronic systems and enable maintaining voltage stability, reducing voltage fluctuations, and enabling the control of power flow between different components. Moreover, DC link contribute to improving the overall efficiency and performance of electric systems by providing a buffer for fluctuating power demands and enabling energy storage capabilities.

In a further embodiment the modular energy storage system further comprises at least a second modular energy storage device as claimed herein before and hereinafter, wherein the first modular energy storage device and the at least second modular energy storage device are connected in series or in parallel or in a bypass state. The load is connected to the load terminal connector module of the first modular energy storage device and the neutral short circuit module is connected to the neutral terminal connector module of the at least second modular energy storage device. The modular energy storage system can, for example, be implemented in a large-scale energy storage with multiple batteries which can flexibly be connected in relation to each other to adjust parameters of the energy storage such as voltage and current and enhance scalability and modularity of the energy storage.

In a further embodiment the modular energy storage system further comprises at least a second modular energy storage device as claimed herein before and hereinafter and at least a second neutral short circuit module. The first modular energy storage device and the at least second modular energy storage device are connected in a double star circuit configuration. The load is connected at least to the load terminal connector module of the first modular energy storage device and at least to the load terminal connector module of the at least second modular energy storage device. The neutral short circuit module is connected to at least the neutral terminal connector module of the first modular energy storage device and the at least second neutral short circuit module is connected at least to the neutral terminal connector module of the at least second modular energy storage device.

In accordance with a fourth aspect, a method for modifying a modular energy storage device as claimed herein before and hereinafter is provided. The method is preferably for modifying a modular energy storage device for use in a second life application. The method at least comprises the step of removing, preferably unplugging, a neutral short circuit module from a neutral terminal connector module of the modular energy storage device. Alternatively or additionally the method comprises the step of removing, preferably unplugging, a load terminal connector multiplexer from the load terminal connector module of the modular energy storage device. Alternatively or additionally the method comprises the step of removing, preferably unplugging, a combined neutral short circuit module and load terminal connector multiplexer from the neutral terminal connector module and the load terminal connector module of the modular energy storage device. "Unplugging" preferably refers to removing or disconnecting the neutral short circuit module from the neutral terminal connector module without damaging or destroying the neutral short circuit module or the neutral terminal connector module and to removing or disconnecting load terminal connector multiplexer from the load terminal connector module without damaging or destroying the load terminal connector multiplexer or the load terminal connector module. The removing of the neutral short circuit module and/or of the load terminal connector multiplexer can be done form outside the housing. This means that the housing does not need to be opened or manipulated in any other way to modify the modular energy storage device. This can save transition costs from one application of the modular energy storage device to another application of the modular energy storage device such as from a first life application to a second life application.

All aspects and embodiments as described above may be combined as deemed fit by the skilled person.

"A(n)" in the present case should not necessarily be understood to be restrictive to exactly one element. Rather, a plurality of elements, such as, for example, two, three or more, can also be provided. Any other numeral used here, too, should not be understood to the effect that there is a restriction to exactly the stated number of elements. Rather, numerical deviations upwards and downwards are possible, unless indicated to the contrary.

Further possible implementations of the invention also comprise not explicitly mentioned combinations of any features or embodiments that are described above or below with respect to the exemplary embodiments. In this case, a person skilled in the art will also add individual aspects as improvements or supplementations to the respective basic form of the invention.
Fig. 1 shows a schematic example of a modular energy storage device according to a first aspect;
Fig. 2 shows a schematic example of a modular energy storage device according to a second aspect;
Fig. 3 shows a refined example of the modular energy storage device according to the first aspect;
Fig. 4 shows a refined example of the modular energy storage device according to the second aspect;
Fig. 5 shows a further refined example of the modular energy storage device according to the first aspect;
Fig. 6 shows a further refined example of the modular energy storage device according to the first aspect;
Fig. 7 shows a further refined example of the modular energy storage device according to the first aspect;
Fig. 8 shows a further refined example of the modular energy storage device according to the first aspect;
Fig. 9 shows a further refined example of the modular energy storage device according to the first aspect;
Fig. 10 shows a further refined example of the modular energy storage device according to the first aspect;
Fig. 11 shows a schematic example of a modular energy storage system;
Fig. 12 shows a further schematic example of a modular energy storage system;
Fig. 13 shows a further schematic example of a modular energy storage system;
Fig. 14 shows a further schematic example of a modular energy storage system;
Fig. 15 shows a further schematic example of a modular energy storage system;
Fig. 16 shows a schematic example of a power converter module; and
Fig. 17 shows a flow chart of a method for modifying a modular energy storage device.

Unless indicated to the contrary, elements that are the same or functionally the same have been given the same reference signs in the figures. It should also be noted that the illustrations in the figures are not necessarily true to scale.

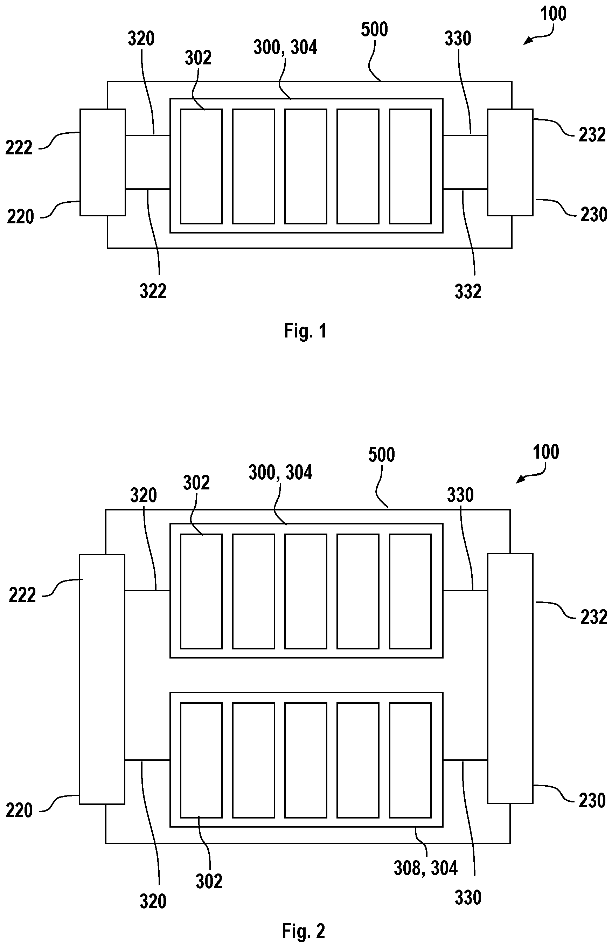

Fig. 1 shows a schematic example of a modular energy storage device 100 according to a first aspect. The modular energy storage device 100 is particularly but not exclusively used and/or suitable as a traction battery for a battery electric vehicle (BEV), a plug-in hybrid electric vehicle (PHEV), a hybrid electric vehicle (HEV), or a fuel cell electric vehicle (FCEV).

The modular energy storage device 100 comprises a first modular energy storage string 300. The first modular energy storage string 300 has multiple energy sources 302. The number of the energy sources 302 of the modular energy storage string 300 can vary and the modular energy storage string 300 can have only one energy source 302 or a plurality of energy sources 302.

The modular energy storage string 300 further comprises a power converter module 304. The power converter module 304 can be one component and can be provided separately from the energy sources 302 or can be integrated into one of the energy sources 302. The power converter module 304 can alternatively comprise several sub-components which can be provided separately from the energy sources 302 or which can be integrated into one of the energy sources 302. The modular energy storage string 300 can comprise a string housing which encompasses all or parts of the energy sources 302 and the power converter module 304.

The modular energy storage string 300 further comprises a first neutral terminal 320 and a second neutral terminal 322. The first neutral terminal 320 and the second neutral terminal 322 are individually connected to a neutral terminal connector module 220 using wires or busbars or the like. The neutral terminal connector module 220 has a connecting part 222 which allows to connect an electrical device or component to the first neutral terminal 320 and the second neutral terminal 322.

The modular energy storage string 300 further comprises a first load terminal 330 and a second load terminal 332. The first load terminal 330 and the second load terminal 332 are individually connected to a load terminal connector module 230 using wires or busbars or the like. The load terminal connector module 230 has a connecting part 232 which allows to connect an electrical device or component to the first load terminal 330 and the second load terminal 332.

The neutral terminal connector module 220 and/or the load terminal connector module 230 can be one single component or can be several components provided independently from each other.

The modular energy storage device 100 further comprises a housing 500 encompassing the modular energy storage string 300 with the energy sources 302, the power converter module 304, the first neutral terminal 320, the second neutral terminal 322, the first load terminal 330, and the second load terminal 332. The housing 500 further encompasses part of the neutral terminal connector module 220 as well as part of the load terminal connector module 230. The connecting part 222 of the neutral terminal connector module 220 as well as the connecting part 232 of the load terminal connector module 230 are not encompassed by the housing 500 and are accessible from outside the housing 500. The neutral terminal connector module 220 and/or the load terminal connector module 230 can alternatively be not encompassed by the housing 500 and can therefore be entirely provided outside of the housing 500.

Fig. 2 shows a schematic example of a modular energy storage device 100 according to a second aspect. The modular energy storage device 100 is particularly but not exclusively used and/or suitable as a traction battery for a battery electric vehicle (BEV), a plug-in hybrid electric vehicle (PHEV), a hybrid electric vehicle (HEV), or a fuel cell electric vehicle (FCEV).

The modular energy storage device 100 comprises a first modular energy storage string 300 and a second modular energy storage string 308. The modular energy storage device 100 can have further modular energy storage strings. The second modular energy storage string 308 is configured equivalently to the first modular energy storage string 300 and therefore comprises the same components as the first modular energy storage string 300. The first modular energy storage string 300 has multiple energy sources 302. The number of the energy sources 302 of the first modular energy storage string 300 can vary and the first modular energy storage string 300 can have only one energy source 302 or a plurality of energy sources 302.

The first modular energy storage string 300 further comprises a power converter module 304. The power converter module 304 can be one component and can be provided separately from the energy sources 302 or can be integrated into one of the energy sources 302. The power converter module 304 can alternatively comprise several sub-components which can be provided separately from the energy sources 302 or which can be integrated into one of the energy sources 302. The first modular energy storage string 300 can comprise a string housing which encompasses all or parts of the energy sources 302 and the power converter module 304.

The first modular energy storage string 300 further comprises a first neutral terminal 320 and the second modular energy storage string 308 also comprises a first neutral terminal 320. The first neutral terminal 320 of the first modular energy storage device 300 and the first neutral terminal 320 of the second modular energy storage device 308 are individually connected to a neutral terminal connector module 220 using wires or busbars or the like. The neutral terminal connector module 220 has a connecting part 222 which allows to connect an electrical device or component to the first neutral terminal 320 of the first modular energy storage device 300 and/or to the first neutral terminal 320 of the second modular energy storage device 308.

The first modular energy storage string 300 further comprises a first load terminal 330 and the second modular energy storage string 308 also comprises a first load terminal 330. The first load terminal 330 of the first modular energy storage device 300 and the first load terminal 330 of the second modular energy storage device 308 are individually connected to a load terminal connector module 230 using wires or busbars or the like. The load terminal connector module 230 has a connecting part 222 which allows to connect an electrical device or component to the first load terminal 330 of the first modular energy storage device 300 and/or to the first load terminal 330 of the second modular energy storage device 308.

The first modular energy storage string 300 and the second modular energy storage string 308 can share a common string housing. The power converter module 304 of the first modular energy storage string 300 and the power converter module 304 of the second modular energy storage string 308 can be provided separately from each other or can be implemented as one component. The second modular energy storage string 308 can alternatively be configured differently from the first modular energy storage string 300 and comprise (partly) different components than the first modular energy storage string 300.

The neutral terminal connector module 220 and/or the load terminal connector module 230 can be one single component or can be several components provided independently from each other.

The modular energy storage device 100 further comprises a housing 500 encompassing the first modular energy storage string 300 and the second modular energy storage string 308 with their respective energy sources 302, the power converter module 304, the first neutral terminal 320, and the first load terminal 330. The housing 500 further encompasses part of the neutral terminal connector module 220 as well as part of the load terminal connector module 230. The connecting part 222 of the neutral terminal connector module 220 as well as the connecting part 232 of the load terminal connector module 230 are not encompassed by the housing 500 and are accessible from outside the housing 500. The neutral terminal connector module 220 and/or the load terminal connector module 230 can alternatively be not encompassed by the housing 500 and can therefore be entirely provided outside of the housing 500.

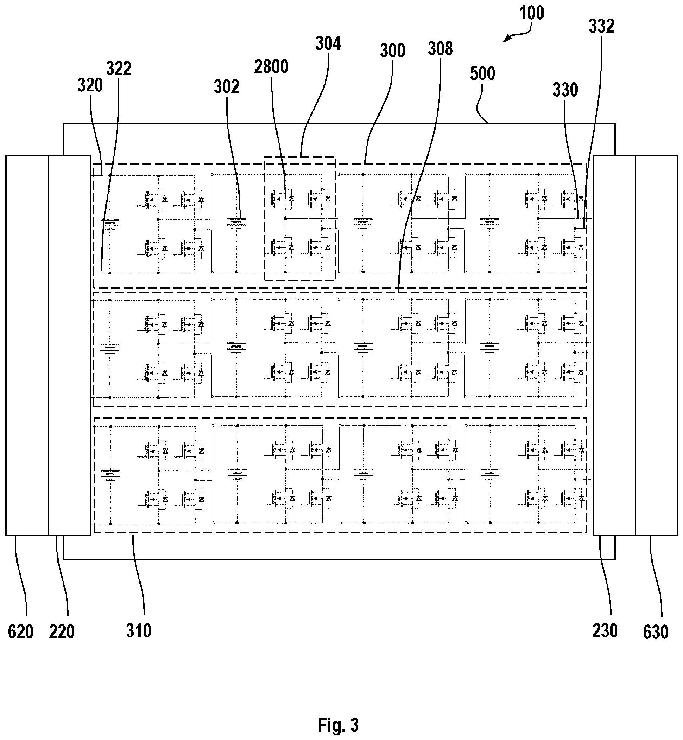

Fig. 3 shows a refined example of the modular energy storage device 100 according to the first aspect. The modular energy storage device 100 comprises a second modular energy storage string 308 and a third modular energy storage string 310 in addition to the first modular energy storage string 300. The first modular energy storage string 300, the second modular energy storage string 308, and the third modular energy storage string 310 are encompassed by the housing 500.

The first modular energy storage string 300, the second modular energy storage string 308, and the third modular energy storage string 310 are arranged adjacent to each other to ensure accessibility of the first neutral terminal 320, the second neutral terminal 322, the first load terminal 330, and the second load terminal 332 of each of the first modular energy storage string 300, the second modular energy storage string 308, and the third modular energy storage string 310.

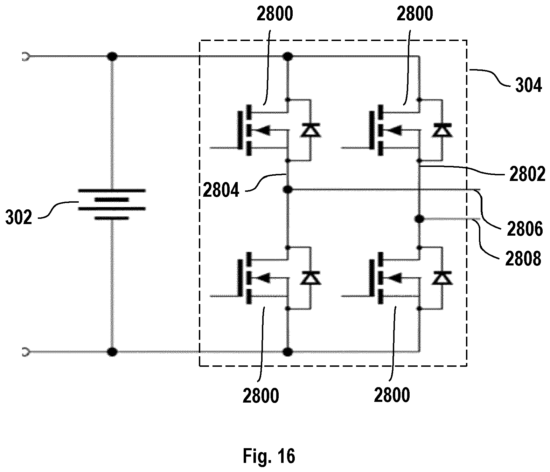

The first modular energy storage string 300 comprises four of the energy sources 302. Each of the energy sources 302 has a corresponding power converter module 304. Each power converter module 304 comprises four switching elements 2800. One of the energy sources 302 together with its corresponding power converter module 304 can be referred to as a sub-module of the first modular energy storage string 300. The energy source 302 and the power converter module 304 can be encompassed by a separate sub-module housing. The power converter modules 304 of the first modular energy storage string 300 are configured for selectively switching each of the plurality of energy sources 302 of the first modular energy storage string at least temporarily in series positive and/or in series negative and/or in a positive bypass state and/or in a negative bypass state and/or in parallel. The power converter module 304 will be described in more detail in fig. 16.

The second modular energy storage string 308 and the third modular energy storage string 310 are configured equivalently to the first modular energy storage string 300 and therefore comprise the same components as the first modular energy storage string 300. The first modular energy storage string 300, the second modular energy storage string 308, and the third modular energy storage string 310 do, however, not necessarily need to be configured equivalently to each other.

The first neutral terminal 320 and the second neutral terminal 322 of the first modular energy storage string 300, and the first neutral terminal 320 and the second neutral terminal 322 of the second modular energy storage string 308, and the first neutral terminal 320 and the second neutral terminal 322 of the third modular energy storage string 310 are each individually electrically connected to the neutral terminal connector module 220. A neutral short circuit module 620 is electrically and mechanically connected to the neutral terminal connector module 220.

The first load terminal 330 and the second load terminal 332 of the first modular energy storage string 300, and the first load terminal 330 and the second load terminal 332 of the second modular energy storage string 308, and the first load terminal 330 and the second load terminal 332 of the third modular energy storage string 310 are each individually electrically connected to the load terminal connector module 230. A load terminal connector multiplexer 630 is electrically and mechanically connected to the load terminal connector module 230. The load terminal connector multiplexer 630 enables electrical connection of a load 430 to the load terminal connector module 230 and is designed to meet the requirements of the load 430 with regard to electrical and preferably also mechanical connection. The load terminal connector multiplexer 630 is not mandatory and the load 430 can also be connected to the load terminal connector module 230 directly without the load terminal connector multiplexer 630.

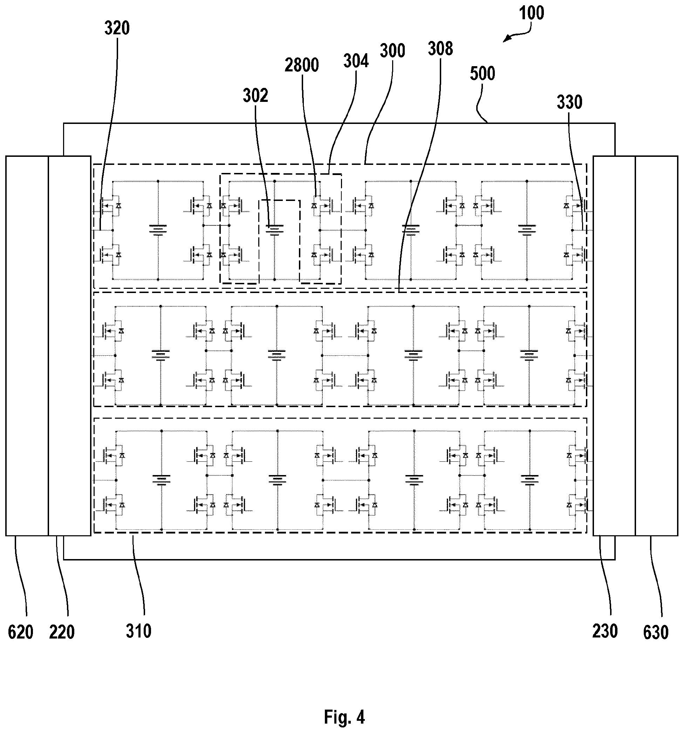

Fig. 4 shows a refined example of the modular energy storage device 100 according to the second aspect. The modular energy storage device 100 comprises a third modular energy storage string 310 in addition to the first modular energy storage string 300 and the second modular energy storage string 308. The first modular energy storage string 300, the second modular energy storage string 308, and the third modular energy storage string 310 are encompassed by the housing 500.

The first modular energy storage string 300, the second modular energy storage string 308, and the third modular energy storage string 310 are arranged adjacent to each other to ensure accessibility of the first neutral terminal 320 and the first load terminal 330 of each of the first modular energy storage string 300, the second modular energy storage string 308, and the third modular energy storage string 310.

The first modular energy storage string 300 comprises four of the energy sources 302. Each of the energy sources 302 has a corresponding power converter module 304. Each power converter module 304 comprises four switching elements 2800. One of the energy sources 302 together with its corresponding power converter module 304 can be referred to as a sub-module of the first modular energy storage string 300. The energy source 302 and the power converter module 304 can be encompassed by a separate sub-module housing. The power converter modules 304 of the first modular energy storage string 300 are configured for selectively switching each of the plurality of energy sources 302 of the first modular energy storage string at least temporarily in series positive and/or in series negative and/or in a positive bypass state and/or in a negative bypass state.

The second modular energy storage string 308 and the third modular energy storage string 310 are configured equivalently to the first modular energy storage string 300 and therefore comprise the same components as the first modular energy storage string 300. The first modular energy storage string 300, the second modular energy storage string 308, and the third modular energy storage string 310 do, however, not necessarily need to be configured equivalently to each other.

The first neutral terminal 320 of the first modular energy storage string 300, the first neutral terminal 320 of the second modular energy storage string 308, and the first neutral terminal 320 of the third modular energy storage string 310 are each individually electrically connected to the neutral terminal connector module 220. A neutral short circuit module 620 is electrically and mechanically connected to the neutral terminal connector module 220.

The first load terminal 330 of the first modular energy storage string 300, the first load terminal 330 of the second modular energy storage string 308, and the first load terminal 330 of the third modular energy storage string 310 are each individually electrically connected to the load terminal connector module 230. A load terminal connector multiplexer 630 is electrically and mechanically connected to the load terminal connector module 230. The load terminal connector multiplexer 630 enables electrical connection of a load 430 to the load terminal connector module 230 and is designed to meet the requirements of the load 430 with regard to electrical and preferably also mechanical connection. The load terminal connector multiplexer 630 is not mandatory and the load 430 can also be connected to the load terminal connector module 230 directly without the load terminal connector multiplexer 630.

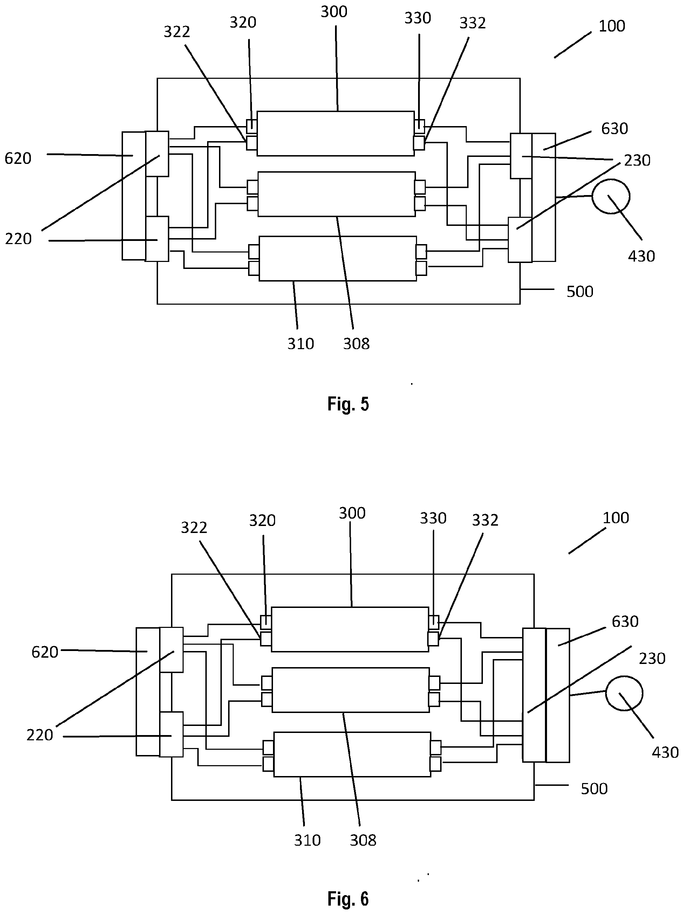

Fig. 5 shows a further refined example of the modular energy storage device 100 according to the first aspect. The neutral terminal connector module 220 is a two-part component comprising two separate sub-components. A respective connecting part 222 of both of the sub-components of the neutral terminal connector module 220 is arranged outside of the housing 500. The neutral terminal connector module 220 can also be designed comprising more than two sub-components or can be designed as one integral component.

The first neutral terminal 320 of the first modular energy storage string 300, the first neutral terminal 320 of the second modular energy storage string 308, and the first neutral terminal 320 of the third modular energy storage string 310 are each individually electrically connected to one of the two sub-components of the neutral terminal connector module 220.

The second neutral terminal 322 of the first modular energy storage string 300, the second neutral terminal 322 of the second modular energy storage string 308, and the second neutral terminal 322 of the third modular energy storage string 310 are each individually electrically connected to the other one of the two sub-components of the neutral terminal connector module 220.

The neutral short circuit module 620 is electrically connected to the connecting parts 222 of both of the sub-components of the neutral terminal connector module 220. The two sub-components of the neutral terminal connector module 220 can, for example, be two 3-pin connectors. Each of the neutral terminals 320, 322 of the modular energy storage strings 300, 308, 310 may be connected to one respective pin of the two 3-pin connectors. The neutral short circuit module 620 can have two corresponding connecting portions to connect to the two 3-pin connectors electrically and mechanically.

The load terminal connector module 230 is a two-part component comprising two separate sub-components. A respective connecting part 222 of both of the sub-components of the load terminal connector module 230 is arranged outside of the housing 500. The load terminal connector module 230 can also be designed comprising more than two sub-components or can be designed as one integral component.

The first load terminal 330 of the first modular energy storage string 300, the first load terminal 330 of the second modular energy storage string 308, and the first load terminal 330 of the third modular energy storage string 310 are each individually electrically connected to one of the two sub-components of the load terminal connector module 230.

The second load terminal 332 of the first modular energy storage string 300, the second load terminal 332 of the second modular energy storage string 308, and the second load terminal 332 of the third modular energy storage string 310 are each individually electrically connected to the other one of the two sub-components of the load terminal connector module 230.

The load terminal connector multiplexer 630 is electrically connected to the connecting parts 222 of both of the sub-components of the load terminal connector module 230. The two sub-components of the load terminal connector module 230 can, for example, be two 3-pin connectors. Each of the load terminals 330, 332 of the modular energy storage strings 300, 308, 310 may be connected to one respective pin of the two 3-pin connectors. The load terminal connector multiplexer 630 can have two corresponding connecting portions to connect to the two 3-pin connectors electrically and mechanically. A load 430 is electrically connected to the load terminal connector multiplexer 630 to receive electrical energy from the modular energy storage device 100.

The design of the load terminal connector module 230 as two 3-pin connectors facilitate simple connection of the load 430 to the load terminal connector module 230 also in a case in which the load 430 does only require electrical connection to the first load terminals 330 of the modular energy storage strings 300, 308, 310 and does not require electrical connection to the second load terminals 322 of the modular energy storage strings 300, 308, 310. The load 430 can in this case be connected to the load terminal connector multiplexer 630 using a 3-pin connector only. In case the load terminal connector multiplexer 630 is not needed, the load 430 can also be directly connected to one of the 3-pin connectors of the load terminal connector module 230.

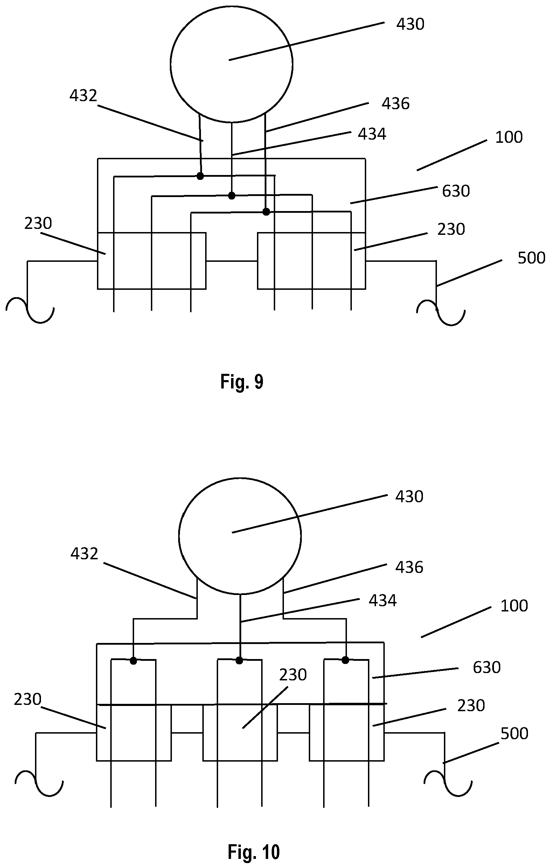

In a case in which the load 430 requires electrical connection to both the first load terminals 330 of the modular energy storage strings 300, 308, 310 and also requires electrical connection to the second load terminals 322 of the modular energy storage strings 300, 308, 310, the load 430 can easily be connected to the load terminal connector multiplexer 630 using, for example, a 6-pin connector. In case the load terminal connector multiplexer 630 is not needed, the load 430 can also be directly connected to both of the 3-pin connectors of the load terminal connector module 230. The load terminal connector multiplexer 630 is described in more detail in fig. 9.

Fig. 6 shows a further refined example of the modular energy storage device 100 according to the first aspect. The load terminal connector module 230 is designed as one integral component, for example as a 6-pin connector. Each of the load terminals 330, 332 of the modular energy storage strings 300, 308, 310 may be connected to one respective pin of the 6-pin connector. The load terminal connector multiplexer 630 is electrically connected to the connecting part 222 of the load terminal connector module 230. The load terminal connector multiplexer 630 can have a connecting portion to connect to the 6-pin connector electrically and mechanically.

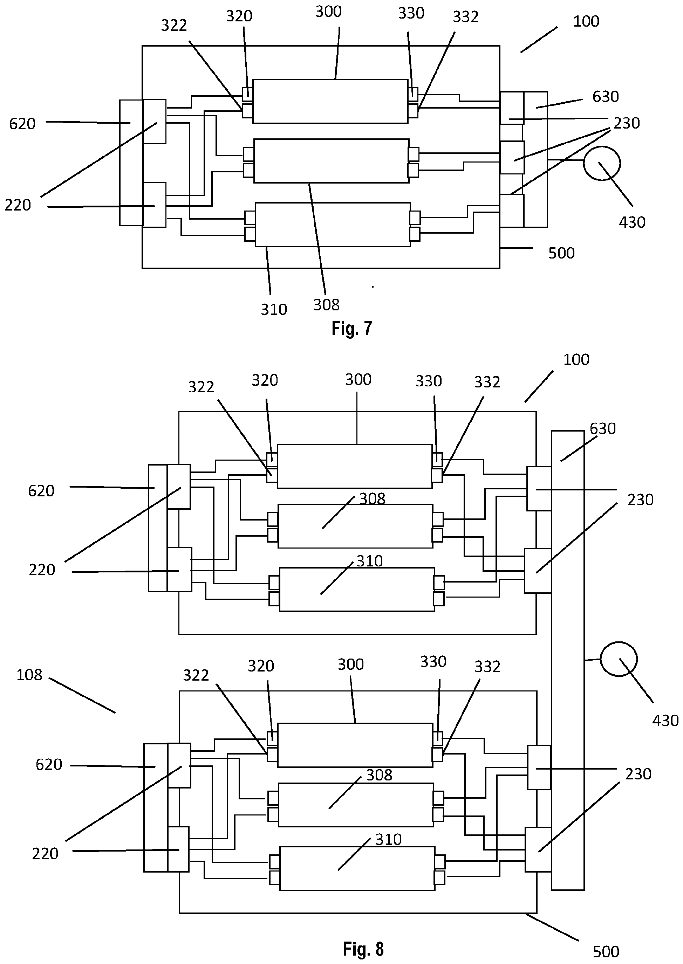

Fig. 7 shows a further refined example of the modular energy storage device 100 according to the first aspect. The load terminal connector module 230 is designed as a three-part component comprising three separate sub-components, for example, three 2-pin connectors.

The first load terminal 330 of the first modular energy storage string 300 and the second load terminal 332 of first modular energy storage string 300 are each individually electrically connected to one of the three sub-components of the load terminal connector module 230. For example, each of the first load terminal 330 of the first modular energy storage string 300 and the second load terminal 332 of first modular energy storage string 300 are individually electrically connected to one pin of the one of the three 2-pin connectors.

The first load terminal 330 of the second modular energy storage string 308 and the second load terminal 332 of second modular energy storage string 308 are each individually electrically connected to a second one of the three sub-components of the load terminal connector module 230. For example, each of the first load terminal 330 of the second modular energy storage string 308 and the second load terminal 332 of second modular energy storage string 308 are individually electrically connected to one pin of the second one of the three 2-pin connectors.

The first load terminal 330 of the third modular energy storage string 310 and the second load terminal 332 of third modular energy storage string 310 are each individually electrically connected to a third one of the three sub-components of the load terminal connector module 230. For example, each of the first load terminal 330 of the third modular energy storage string 310 and the second load terminal 332 of third modular energy storage string 310 are individually electrically connected to one pin of the third one of the three 2-pin connectors.

The load terminal connector multiplexer 630 is electrically connected to the connecting parts 222 of the three sub-components of the load terminal connector module 230. The load terminal connector multiplexer 630 can have three corresponding connecting portions to connect to the three 2-pin connectors electrically and mechanically. The load 430 is electrically connected to the load terminal connector multiplexer 630 to receive electrical energy from the modular energy storage device 100.

The design of the load terminal connector module 230 as three 2-pin connectors facilitate simple connection of the load 430 to the load terminal connector module 230 also in a case in which the load 430 does only require electrical connection to the first load terminal 330 and/or the second load terminal 332 of only one or two of the modular energy storage strings 300, 308, 310 and does not require electrical connection to all of the modular energy storage strings 300, 308, 310. The load 430 can in this case be connected to the load terminal connector multiplexer 630 using a 2-pin connector or two 2-pin connectors only. In case the load terminal connector multiplexer 630 is not needed, the load 430 can also be directly connected to one of the 2-pin connectors of the load terminal connector module 230.

In a case in which the load 430 requires electrical connection to the load terminals 330, 332 of all of the modular energy storage strings 300, 308, 310, the load 430 can easily be connected to the load terminal connector multiplexer 630 using, for example, a 6-pin connector. In case the load terminal connector multiplexer 630 is not needed, the load 430 can also be directly connected to the three 2-pin connectors of the load terminal connector module 230. The load terminal connector multiplexer 630 is described in more detail in fig. 10.

Fig. 8 shows a further refined example of the modular energy storage device 100 according to the first aspect. The load terminal connector module 230 is designed equivalently to fig. 5 as a two-part component comprising two sub-components such as two 3-pin connectors. The load terminal connector multiplexer 630 is designed to be connected to the load terminal connector module 230 of the modular energy storage device 100 as well as to a load terminal connector module 230 of a further modular energy storage device 108. The further modular energy storage device 108 is configured equivalently to the modular energy storage device 100 and has the same components as the modular energy storage device 100. The further modular energy storage device 108 and the modular energy storage device 100 can, however, also be configured differently.

The load terminal connector multiplexer 630 enables the electrical connection of the load 430 to both the modular energy storage device 100 and the further modular energy storage device 108. For example, the load terminal connector multiplexer is configured for electrically connecting a first phase 432 of the load 430 to the first load terminal 330 and/or the second load terminal 332 of the first modular energy storage string 300 of the modular energy storage device 100 and to a first load terminal 330 and/or a second load terminal 332 of a first modular energy storage string 300 of the further modular energy storage device 108. This enables an increase of the current which can be supplied to the first phase 432 of the load 430. A second phase 434 and a third phase 436 of the load 430 can be equivalently connected to the modular energy storage device 100 and the further modular energy storage device 108 using the load terminal connector multiplexer 630. The load terminal connector multiplexer 630 can alternatively be designed to enable the connection of more than one further modular energy storage device 108 and also the connection of more than one loads 430.

Fig. 9 shows a further refined example of the modular energy storage device 100 according to the first aspect. The load terminal connector module 230 is designed as a two-part component and electrically connected to the first modular energy storage string 300, the second modular energy storage string 308, and the third modular energy storage string 310 as shown in fig. 5.

The load terminal connector multiplexer 630 is designed to enable the connection of the load 430 which is a three phase load to the modular energy storage device 100. The load terminal connector multiplexer 630 electrically connects a first phase 432 of the load 430 to both the first load terminal 330 and the second load terminal 332 of the first modular energy storage string 300. The load terminal connector multiplexer 630 electrically connects a second phase 434 of the load 430 to both the first load terminal 330 and the second load terminal 332 of the second modular energy storage string 308. The load terminal connector multiplexer 630 electrically connects a third phase 436 of the load 430 to both the first load terminal 330 and the second load terminal 332 of the third modular energy storage string 310.

In case the two sub-components of the load terminal connector module 230 are designed as two 3-pin connectors, the load terminal connector multiplexer 630 comprises two connecting portions configured to be connected to the 3-pin connectors of the load terminal connector module 230. The load terminal connector multiplexer 630 further comprises a connecting portion configured for connection with the load 430. The connecting portion of the load terminal connector multiplexer 630 for connection with the load 430 can, for example be a 3-pin connector with a pin for each of the first phase 432, the second phase 434, and the third phase 436 of the load 430.

In case each of the phases 432, 434, 436 of the load 430 are to be electrically connected to only one of the first load terminals 330 and the second load terminals 332 of the respective modular energy storage strings 300, 308, 310, a different load terminal connector multiplexer 630 could be used to connect the load 430 to the modular energy storage device 100 without the need for any adaptations to the modular energy storage device 100. The load terminal connector multiplexer 630 in this case, for example, would not connect to the second load terminal 332 of the first modular energy storage string 300, the second load terminal 332 of the second modular energy storage string 308, and the second load terminal 332 of the third modular energy storage string 310.

Fig. 10 shows a further refined example of the modular energy storage device 100 according to the first aspect. The load terminal connector module 230 is designed as a three-part component and electrically connected to the first modular energy storage string 300, the second modular energy storage string 308, and the third modular energy storage string 310 as shown in fig. 7.

The load terminal connector multiplexer 630 is designed to enable the connection of the load 430 which is a three phase load to the modular energy storage device 100. The load terminal connector multiplexer 630 electrically connects a first phase 432 of the load 430 to both the first load terminal 330 and the second load terminal 332 of the first modular energy storage string 300. The load terminal connector multiplexer 630 electrically connects a second phase 434 of the load 430 to both the first load terminal 330 and the second load terminal 332 of the second modular energy storage string 308. The load terminal connector multiplexer 630 electrically connects a third phase 436 of the load 430 to both the first load terminal 330 and the second load terminal 332 of the third modular energy storage string 310.

In case the three sub-components of the load terminal connector module 230 are designed as three 2-pin connectors, the load terminal connector multiplexer 630 comprises three connecting portions configured to be connected to the 2-pin connectors of the load terminal connector module 230. The load terminal connector multiplexer 630 further comprises a connecting portion configured for connection with the load 430. The connecting portion of the load terminal connector multiplexer 630 for connection with the load 430 can, for example be a 3-pin connector with a pin for each of the first phase 432, the second phase 434, and the third phase 436 of the load 430.

In case each of the phases 432, 434, 436 of the load 430 are to be electrically connected to only one of the first load terminals 330 and the second load terminals 332 of the respective modular energy storage strings 300, 308, 310, a different load terminal connector multiplexer 630 could be used to connect the load 430 to the modular energy storage device 100 without the need for any adaptations to the modular energy storage device 100. The load terminal connector multiplexer 630 in this case, for example, would not connect to the second load terminal 332 of the first modular energy storage string 300, the second load terminal 332 of the second modular energy storage string 308, and the second load terminal 332 of the third modular energy storage string 310.

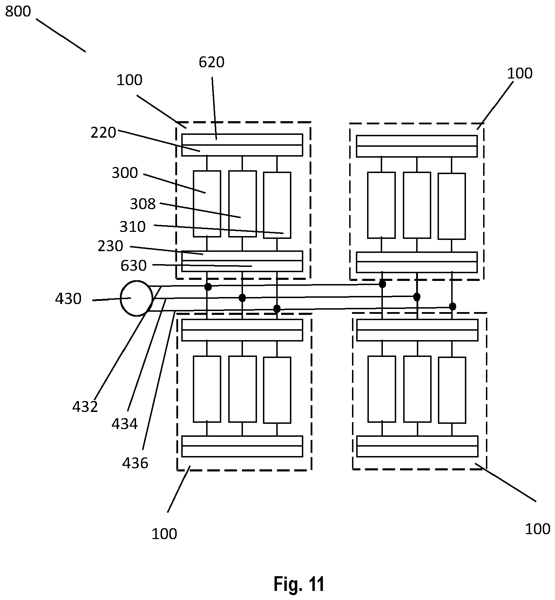

Fig. 11 shows a schematic example of a modular energy storage system 800. The modular energy storage system 800 comprises four modular energy storage devices 100. The four modular energy storage devices 100 are configured equivalently and therefore comprise the same components. The four modular energy storage devices 100 can, however, also be configured differently from each other.

Each of the modular energy storage devices 100 comprises a first modular energy storage string 300, a second modular energy storage string 308, and a third modular energy storage string 310. The first modular energy storage string 300, the second modular energy storage string 308, and the third modular energy storage string 310 are connected to a neutral terminal connector module 220 and to a load terminal connector module 230 in each of the modular energy storage devices 100. The neutral terminal connector module 220 is connected to a neutral short circuit module 620 and the load terminal connector module 230 is connected to a load terminal connector multiplexer 630 in each of the modular energy storage devices 100.

The modular energy storage system 800 further comprises a load 430 which is a three-phase load. The load 430 can, for example, be an electric motor. The load 430 can alternatively have more than or less than three phases. The load 430 has a first phase 432, a second phase 434, and a third phase 436.

The first phase 432 of the load 430 is electrically connected to the respective load terminal connector multiplexer 630 of each of the four modular energy storage devices 100. The load terminal connector multiplexer 630 of each of the four modular energy storage devices 100 is configured to connect the first phase 432 of the load to the first load terminal 330 and/or the second load terminal 332 of the first modular energy storage string 300 of the respective modular energy storage device 100. The load terminal connector multiplexer 630 of each of the four modular energy storage devices 100 is further configured to connect the second phase 434 of the load to the first load terminal 330 and/or the second load terminal 332 of the second modular energy storage string 308 of the respective modular energy storage device 100. The load terminal connector multiplexer 630 of each of the four modular energy storage devices 100 is further configured to connect the third phase 434 of the load to the first load terminal 330 and/or the second load terminal 332 of the third modular energy storage string 310 of the respective modular energy storage device 100.

The modular energy storage system 800 can easily be adapted by removing or adding further modular energy storage devices 100 and therefore adapt the current or power and the capacity of the modular energy storage system 800 available to the load 430. Different designs of load terminal connector multiplexer 630 can alternatively be used instead of the load terminal connector multiplexers 630 which are only connecting the load 430 with one of the modular energy storage devices 100. For example, one load terminal connector multiplexer 630 configured for connecting the load to two or more of the modular energy storage devices 100 could be used to further simplify the modular energy storage system 800.

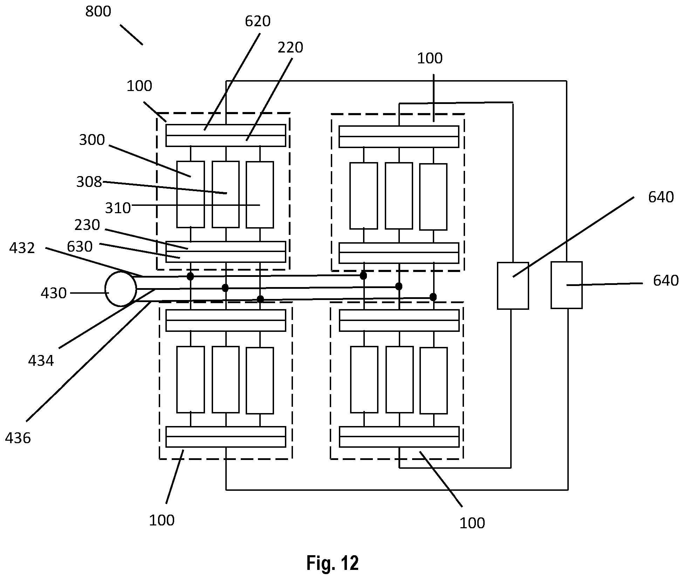

Fig. 12 shows a further schematic example of a modular energy storage system 800. The modular energy storage system 800 further comprises two DC links 640. One of the DC links 640 is connected to the neutral short circuit device 620 of one of the modular energy storage devices 100 and to the neutral short circuit device 620 of a second one of the modular energy storage devices 100. The other one of the DC links 640 is connected to the neutral short circuit device 620 of a third one of the modular energy storage devices 100 and to the neutral short circuit device 620 of a fourth one of the modular energy storage devices 100. The DC links 640 enable improve the overall efficiency and performance of the modular energy storage system 800. Alternatively or additionally, further DC-links 640 can be used to connect ones of the modular energy storage devices 100. Alternatively or additionally, a DC-link 640 can also be connected to the load terminal connector module 230 or the load terminal connector multiplexer 630 of two of the modular energy storage devices 100.

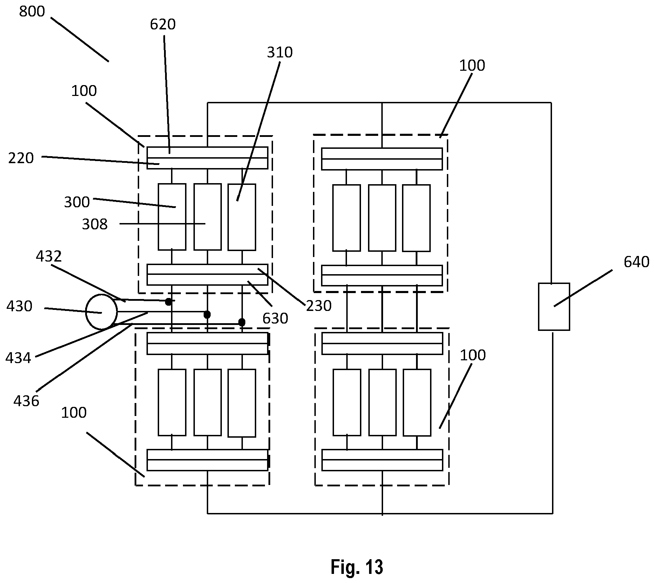

Fig. 13 shows a further schematic example of a modular energy storage system 800. The load 430 is electrically connected to the load terminal connector multiplexer 630 of a first one of the modular energy storage devices 100 and to the load terminal connector multiplexer 630 of a second one of the modular energy storage devices 100. The load terminal connector multiplexer 630 of a third one of the modular energy storage devices 100 is electrically connected to a load terminal connector multiplexer 630 of a fourth one of the modular energy storage devices 100.

The modular energy storage system 800 further comprises a DC link 640. The DC links 640 electrically connects the neutral short circuit devices 620 of the first one and the third one of the modular energy storage devices 100 to the neutral short circuit devices 620 of the second one and the fourth one of the modular energy storage devices 100.

The third one and the fourth one of the modular energy storage devices 100 increase the capacity of the modular energy storage system 800 without increasing the current or power of the modular energy storage system 800 available to the load 430.

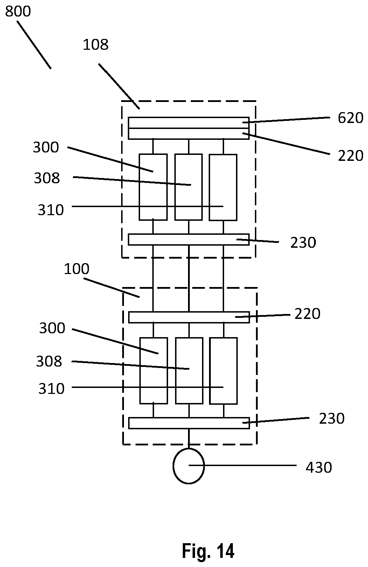

Fig. 14 shows a further schematic example of a modular energy storage system 800. The modular energy storage system 800 comprises two modular energy storage devices 100, 108 which are connected in series. The load terminal connector module 230 of a first one of the modular energy storage devices 108 is electrically connected to the neutral terminal connector module 220 of a second one of the modular energy storage devices 100. A neutral short circuit module 620 is connected to the neutral terminal connector module of the first of the modular energy storage devices 108. A load 430 is connected to the load terminal connector module 230 of the second one of the modular energy storage devices 100.

The load 430 can alternatively be electrically connected to the load terminal connector module 230 of the second one of the modular energy storage devices 100 using a load terminal connector multiplexer 630. The load terminal connector module 230 of the first one of the modular energy storage devices 108 can further alternatively be electrically connected to the neutral terminal connector module 220 of the second one of the modular energy storage devices 100 using a further load terminal connector multiplexer 630.

The modular energy storage system 800 can easily be adapted by removing or adding further modular energy storage devices 100 which are all connected in series and therefore adapt the voltage or power and the capacity of the modular energy storage system 800 available to the load 430.

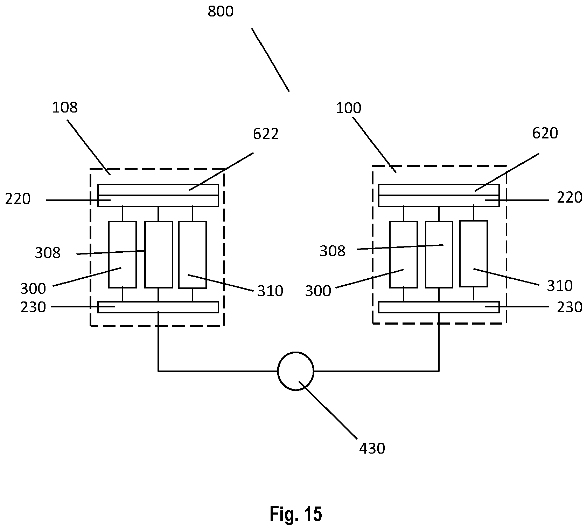

Fig. 15 shows a further schematic example of a modular energy storage system 800. The modular energy storage system 800 comprises two modular energy storage devices 100, 108 which are connected in a double star circuit. One of the modular energy storage devices 100, 108 represents the upper arm of the double star circuit and the other one of the modular energy storage devices 100, 108 represents the lower arm of the double star circuit.

A neutral short circuit module 620 is connected to the neutral terminal connector module of a first of the modular energy storage devices 100. A further neutral short circuit module 622 is connected to the neutral terminal connector module of a second of the modular energy storage devices 108. A load 430 is connected to a load terminal connector module 230 of the first one of the modular energy storage devices 100 and to a load terminal connector module 230 of the second one of the modular energy storage devices 108.

The load 430 can alternatively be electrically connected to the load terminal connector module 230 of the first one of the modular energy storage devices 100 and to the load terminal connector module 230 of the second one of the modular energy storage devices 108 using one or two load terminal connector multiplexers 630.

The modular energy storage system 800 can easily be adapted by removing or adding further modular energy storage devices 100 in the upper arm and/or the lower arm of the double star circuit and therefore adapt the capacity, power and voltage of the modular energy storage system 800 available to the load 430. Further modular energy storage devices 100 would need to be connected in series to one of the first and/or the second of the modular energy storage devices 100.

Fig. 16 shows a schematic example of a power converter module 304. The power converter module 304 exemplarily includes four switching elements 2800. Two respective switching elements 2800 are provided in series connection in a first module string 2802 of the exemplary power converter module 304. Further two respective switching elements 2800 are provided in series connection in a second module string 2804 of the exemplary power converter module 304. Between each of the two switching elements per module string 2802, 2804 a respective further terminal connection 2806, 2808 is provided. The terminal connections 2806, 2808 may be used to modularly connect multiple power converter modules 304 together.

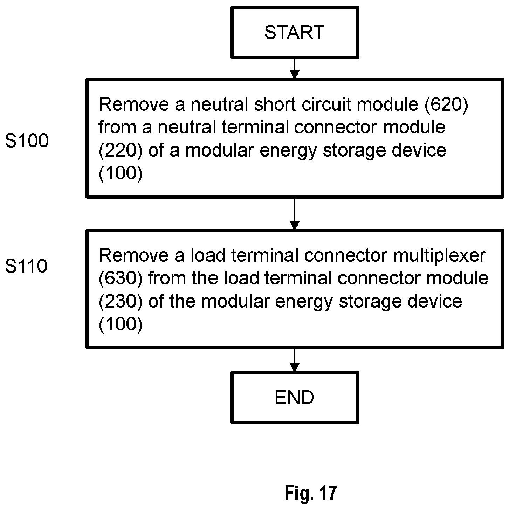

Fig. 17 shows a flow chart of a method for modifying a modular energy storage device 100. The method is preferably for modifying the modular energy storage device 100 for use in a second life application after the modular energy storage device 100 was used in a first life application. For example, the modular energy storage device 100 could have been used as a traction battery in an electric vehicle as a first use and is to be used in a large-scale energy storage system in conjunction with a plurality of further batteries as a second use. There might be different requirements as to how the modular energy storage device 100 needs to be connected on its neutral side and/or on its load side in the second use scenario compared to the first use scenario. The modular energy storage device 100 therefore needs to be modified to allow connection of the modular energy storage device 100 in the second life scenario.

The method comprises the step of removing a neutral short circuit module 620 from a neutral terminal connector module 220 of the modular energy storage device 100. The neutral short circuit module 620 can be easily disconnected or unplugged from the neutral terminal connector module 220 without damaging or destroying the neutral terminal connector module 220 or any other parts of the modular energy storage device 100. The neutral short circuit module 620 can further be removed without opening a housing 500 of the modular energy storage device 100. Accordingly, for example, the sealing of the housing 500 does not need to be restored.

The method alternatively or additionally comprises the step of removing a load terminal connector multiplexer 630 from a load terminal connector module 230 of the modular energy storage device 100. The load terminal connector multiplexer 630 can be easily disconnected or unplugged from the load terminal connector module 230 without damaging or destroying the load terminal connector module 230 or any other parts of the modular energy storage device 100. The load terminal connector multiplexer 630 can further be removed without opening the housing 500 of the modular energy storage device 100. Accordingly, for example, the sealing of the housing 500 does not need to be restored.

The method can alternatively or additionally comprise one of the steps of connecting a new neutral short circuit module 620 to the neutral terminal connector module 220 and connecting a new load terminal connector multiplexer 630 to the load terminal connector module 230 of the modular energy storage device 100. The new neutral short circuit module 620 and/or the load terminal connector multiplexer 630 can meet the requirements of the second life scenario.

The method therefore allows to simplify the modification of the modular energy storage device 100 in the context of the transition from the first life scenario to the second life scenario. The method requires less manpower, no or less special machinery or tooling, and can be performed very time efficiently compared to modifying a conventional battery. The method therefore does not have to be performed at specialized locations and can therefore be performed, for example, at the location where the modular energy storage device 100 is removed from its first life application or at the location where the modular energy storage device 100 is reinstalled in its second life application. Additional transportation of the modular energy storage device 100 to and from a specialized location for modifying the modular energy storage device 100 is therefore not necessary. The modular energy storage device 100 can therefore be modified for a second life application very time- and cost efficiently with the described method.

### LIST OF REFERENCE SIGNS

- 100: modular energy storage device
- 108: modular energy storage device
- 220: neutral terminal connector module
- 222: connecting part
- 230: load terminal connector module
- 232: connecting part
- 300: first modular energy storage string
- 302: energy source
- 304: power converter module
- 308: second modular energy storage string
- 310: third modular energy storage string
- 320: first neutral terminal
- 322: second neutral terminal
- 330: first load terminal
- 332: second load terminal
- 430: load
- 432: first phase
- 434: second phase
- 436: third phase
- 450: electric component
- 500: housing
- 620: neutral short circuit module
- 622: second neutral short circuit module
- 630: load terminal connector multiplexer
- 640: DC link
- 800: modular energy storage system
- 2800: switching element
- 2802: first module string
- 2804: second module string
- 2806: terminal connection
- 2808: terminal connection
- S 100: removing a neutral short circuit module
- S 110: removing a load terminal connector multiplexer

## Claims

1. A modular energy storage device (100), the modular energy storage device comprising:
at least a first modular energy storage string (300) having:
a plurality of energy sources (302),
at least one power converter module (304), the at least one power converter module (304) comprising at least two switching elements (2800) for selectively switching each of the plurality of energy sources (302),
a first neutral terminal (320),
a first load terminal (330), and
at least one of a second neutral terminal (322) and a second load terminal (332);
a neutral terminal connector module (220) connectable or connected to the first neutral terminal (320) and/or the second neutral terminal (322); and/or
a load terminal connector module (230) connectable or connected to the first load terminal (330) and/or the second load terminal (332);
wherein
the neutral terminal connector module (220) is connectable to at least a neutral point or at least a common star point; and/or
wherein
the load terminal connector module (230) is connectable to at least a load (430); and
the neutral terminal connector module (220) and/or the load terminal connector module (230) being configured for parallel connection with at least a further modular energy storage string.

2. The modular energy storage device (100) of claim 1, further comprising a housing (500), wherein
the at least a first modular energy storage string (300) is provided at least partly within the housing (500);
wherein at least a connecting part (222) of the neutral terminal connector module (220) is provided outside the housing (500), the connecting part (222) being connectable to the at least one neutral point or the at least one common star point; and/or
wherein at least a connecting part (232) of the load terminal connector module (230) is provided outside the housing (500), the connecting part (232) being connectable to the load (430).

3. The modular energy storage device (100) of claim 1 or 2,
further comprising at least a second modular energy storage string (308) and/or a third modular energy storage string (310), the second and/or the third modular energy storage string (308, 310) being equivalently configured to the at least first modular energy storage string (300), wherein
the neutral terminal connector module (220) is connectable or connected to at least a first neutral terminal (320) of the second modular energy storage string (308) and/or at least a first neutral terminal (320) of the third modular energy storage string (310), and/or
the load terminal connector module (230) is connectable or connected to at least a first load terminal (330) of the second modular energy storage string (308) and/or at least a first load terminal (330) of the third modular energy storage string (310).

4. The modular energy storage device (100) of claim 3, further comprising a neutral short circuit module (620) connected or connectable to the neutral terminal connector module (220) and connecting at least the first neutral terminal (320) of the first modular energy storage string (300) and at least the first neutral terminal (320) of the second modular energy storage string (308).

5. The modular energy storage device (100) of claim 3 or 4, further comprising a load terminal connector multiplexer (630) connectable to the load terminal connector module (230) of the modular energy storage device (100) and/or connectable to the load (430) and/or a load terminal connector module (230) of a further modular energy storage device (108), wherein the load terminal connector multiplexer (630) is configured to
connect at least a first phase (432) of the load (430) to the first load terminal (330) and/or the second load terminal (332) of the first modular energy storage string (300) of the modular energy storage device (100); and/or
connect at least the first phase (432) of the load (430) to a first load terminal (330) and/or a second load terminal (332) of a first modular energy storage string (300) of the further modular energy storage device (108).

6. The modular energy storage device (100) of claim 3 or 4, further comprising a load terminal connector multiplexer (630) connectable to the load terminal connector module (230) and/or connectable to the load (430), wherein the load terminal connector multiplexer (630) is configured to
connect at least a first phase (432) of the load (430) to the first load terminal (330) and/or the second load terminal (332) of the first modular energy storage string (300),
connect a second phase (434) of the load (430) to the first load terminal (330) and/or the second load terminal (332) of the second modular energy storage string (308), and/or
connect a third phase (436) of the load (430) to the first load terminal (330) and/or the second load terminal (332) of the third modular energy storage string (310).

7. The modular energy storage device (100) of claims 5 and 6, wherein the load terminal connector multiplexer (630) is removably connected or connectable to the load terminal connector module (230), or wherein the load terminal connector module (230) at least partly comprises the load terminal connector multiplexer (630).

8. The modular energy storage device (100) of claims 1 or 2, further comprising a neutral short circuit module (620) connected or connectable to the neutral terminal connector module (220) and connecting / short-circuiting the first neutral terminal (320) and the second neutral terminal (322).

9. A modular energy storage device (100), the modular energy storage device (100) comprising:
a first modular energy storage string (300) having
a plurality of energy sources (302),
at least one power converter module (304), the at least one power converter module (304) comprising at least two switching elements (2800) for selectively switching each of the plurality of energy sources (302),
at least a first neutral terminal (320), and
at least a first load terminal (330),
a second modular energy storage string (308), the second modular energy storage string (308) being equivalently configured to the at least first modular energy storage string (300), and
at least a neutral terminal connector module (220) connectable or connected to the first neutral terminal (320) of the first modular energy storage string (300) and to the first neutral terminal (320) of the second modular energy storage string (308); and/or
at least a load terminal connector module (230) connectable or connected to the first load terminal (330) of the first modular energy storage string (300) and to the first load terminal (330) of the second modular energy storage string (308).

10. The modular energy storage device (100) of claim 9, further comprising
a neutral short circuit module (620) connectable to the neutral terminal connector module (220),
wherein the neutral short circuit module (620) is configured to connect the first neutral terminal (320) of the first modular energy storage string (300) and the first neutral terminal (320) of the second modular energy storage string (308).

11. The modular energy storage device (100) of claim 10, wherein the neutral short circuit module (620) is removably connected or connectable to the neutral terminal connector module (220).

12. The modular energy storage device (100) of any one of claims 9 to 11, further comprising
a housing (500), wherein
the first modular energy storage string (300) and the second modular energy storage string (308) are provided at least partly within the housing (500), and
at least a connecting part (222) of the neutral terminal connector module (220) is provided outside the housing (500) and/or
at least a connecting part (232) of the load terminal connector module (230) is provided outside the housing (500).

13. The modular energy storage device (100) of any one of the preceding claims, wherein
the at least two switching elements (2800) being configured for selectively switching each of the plurality of energy sources (302) at least temporarily in series positive and/or in series negative and/or in a positive bypass state and/or in a negative bypass state and/or in parallel.

14. The modular energy storage device (100) of any one of the preceding claims, wherein
the neutral terminal connector module (220) is configured to be connected directly to at least the first neutral terminal (320) and/or the second neutral terminal (322) or with interposition of further electric components (450); and/or
the load terminal connector module (230) is configured to be connected directly to at least the first load terminal (330) and/or the second load terminal (332) or with interposition of further electric components (450).

15. A modular energy storage system (800), comprising:
a first modular energy storage device (100) according to any one of the preceding claims;
a load (430) at least connected to the load terminal connector module (230) of the first modular energy storage device (100); and
a neutral short circuit module (620) at least connected to the neutral terminal connector module (220) of the first modular energy storage device (100).

16. The modular energy storage system (800) of claim 15, further comprising at least one DC link (640) connected to at least the neutral terminal connector module (220) of the first modular energy storage device (100) or to at least the neutral short circuit module (620).

17. The modular energy storage system (800) of claim 16, further comprising at least a second modular energy storage device (108) according to one of claims 1 to 14, wherein
the first modular energy storage device (100) and the at least second modular energy storage device (108) are connected in series or in parallel or in a bypass state;
the load (430) is connected to the load terminal connector module (220) of the first modular energy storage device (100); and
the neutral short circuit module (620) is connected to the neutral terminal connector module (200) of the at least second modular energy storage device (108).

18. The modular energy storage system (800) of claim 16, further comprising at least a second modular energy storage device (108) according to one of claims 1 to 14 and at least a second neutral short circuit module (622), wherein
the first modular energy storage device (100) and the at least second modular energy storage device (108) are connected in a double star circuit configurati on;
the load (430) is connected at least to the load terminal connector module (230) of the first modular energy storage device (100) and at least to the load terminal connector module (230) of the at least second modular energy storage device (108);
the neutral short circuit module (620) is connected to at least the neutral terminal connector module (220) of the first modular energy storage device (100); and
the at least second neutral short circuit module (622) is connected at least to the neutral terminal connector module (220) of the at least second modular energy storage device (108).

19. A method for modifying the modular energy storage device (100) according to any one of claims 1 to 13, the method at least comprising the steps:
removing (S 100) a neutral short circuit module (620) from a neutral terminal connector module (200) of the modular energy storage device (100), and/or
removing (S110) a load terminal connector multiplexer (630) from the load terminal connector module (230) of the modular energy storage device (100).
